# EUROPÄISCHE PATENTSCHRIFT

(11) **EP 2 762 659 B1**
(45) Veröffentlichungstag und Bekanntmachung des Hinweises auf die Patenterteilung: **22.03.2017**
(21) Anmeldenummer: 13197597.1
(22) Anmeldetag: 17.12.2013
(51) Int. Cl.: E04H 5/06

(54) **Montage- und Reparatureinrichtung**
Assembly and repair device
Dispositif de montage et de réparation

(30) Priorität: 31.01.2013 DE 102013100980
(43) Veröffentlichungstag der Anmeldung: 06.08.2014
(73) Patentinhaber: Balzer, Hans, 87700 Memmingen (DE)
(72) Erfinder: Balzer, Hans, 87700 Memmingen (DE)
(74) Vertreter: Popp, Eugen

(56) Entgegenhaltungen:
- DE-U1- 9 202 835
- DE-U1- 9 320 679
- DE-U1-202008 003 251
- US-B1- 6 966 984

## Beschreibung

Die Erfindung betrifft eine Montage- und Reparatureinrichtung für Fahrzeuge, insbesondere Bau- und Nutzfahrzeuge gemäß dem Oberbegriff des Anspruches 1.

Montage- und Reparatureinrichtungen der hier angesprochenen Art sind beispielsweise aus der DE 10 2009 012 047 A1 und der DE 20 2008 003 251 U1 bekannt. Die allgemein als Fertigteil-Montage- oder Reparaturgruben bezeichneten Einrichtungen werden in Werkstätten oder Herstellungsbetrieben zur Montage oder Reparatur von Kraftfahrzeugen, Schienenfahrzeugen, Maschinen oder Maschinenteilen verwendet. Dabei kann das Personal in angenehmer Aufrechthaltung unter den entsprechenden Fahrzeugen und Maschinen arbeiten. Bei den hier angesprochenen Montage- und Reparaturgruben handelt es sich um herstellerseitig vorgefertigte Kassetten aus Stahl od. dgl. korrosionsbeständigem Material, die in eine Bodenausnehmung vor Ort eingesetzt werden. Die Kassette ist üblicherweise einteilig ausgebildet und weist zwei Längsseitenwände, endseitig angeordnete Stirnseitenwände und einen Boden auf, wobei zumindest die Seitenwände ggf. jeweils eine Innenwandung und eine im Abstand dazu angeordnete Außenwandung aufweisen. Zwischen der Innenwandung und der Außenwandung ist dann ein Hohlraum vorgesehen, der zur Aufnahme von einem aushärtbaren Füllmaterial wie Beton dient. Die Kassetten werden im vorgefertigten Zustand mit Hilfe eines Schwerlasttransportes auf der Straße, als Schienentransport mit der Bahn und/oder in Containern perSchiff zum Einsatzort transportiert und unterliegen deshalb hinsichtlich ihren Abmessungen Beschränkungen, die sich aus den jeweils zugelassenen Transportabmessungen ergeben, die international, europaweit oder auch in den einzelnen Ländern geregelt sind. Eine vorgefertigte Kassette kann daher nicht beliebige Abmessungen aufweisen, sondern ist an die maximal zulässigen Abmessungen je nach Transportweg gebunden. Aus der DE 932067901 sowie der DE 93 20 679 U1 ist zwar eine mehrteilige Kassette der vorgenannten Art bekannt, wobei die Abmessungen der Kassettenabschnitte offen sind. Außerdem müssen beim Stand der Technik gemäß der DE 932067901 sowie der DE 93 20 679 U1 die Kassettenabschnitte zur Abdichtung gegenüber dem Erdreich vor Ort miteinander verschweißt werden. Dies ist aufwändig und korrosionsanfällig.

Aufgabe der vorliegenden Erfindung ist es daher, eine Montage- und Reparatureinrichtung zu schaffen, die nicht auf die durch ihren Transport resultierende maximal zulässige Abmessung beschränkt ist, bzw. deren Abschnitte auf maximal zulässige Transportgrößen abgestimmt sind, und die vor Ort ohne großen Aufwand funktionsgerecht montiert werden kann.

Zur Lösung der oben genannten Aufgabe wird eine Montage- und Reparatureinrichtung mit den Merkmalen des Anspruchs 1 vorgeschlagen. Die erfindungsgemäße Kassette zeichnet sich u. a. dadurch aus, dass die wenigstens zwei Kassettenabschnitte Abmessungen aufweisen jeweils wie folgt sind:
Länge (L1) ≤ 6.000 mm
Breite (B1) ≤ 2.400 mm
Höhe (H1) ≤ 2.400 mm
bzw.
Länge (L2) ≤ 14.500 mm
Breite (B2) ≤ 2.400 mm
Höhe (H2) ≤ 2.700 mm.

Ein wesentlicher Punkt der Erfindung liegt somit darin, dass die Kassette mehrteilig ausgebildet ist und in wenigstens zwei Kassettenabschnitte unterteilt ist, deren Abmessungen jeweils gleich oder kleiner sind als die zulässigen Maße eines Transportcontainers. Die oben genannten Maße bilden dabei die Innenmaße eines Containers. Sofern Auf diese Weise ist die Kassette am Einsatzort in ihrer Länge nicht mehr beschränkt, sondern kann nahezu beliebig lang, breit und hoch ausgebildet sein, was insbesondere hinsichtlich ihrer Länge für den Einsatz der Montage- und Reparatureinrichtung für Schienenfahrzeuge von besonderem Interesse ist. Die erfindungsgemäße Kassette kann also Abmessungen aufweisen, die ein Vielfaches der Abmessungen einer herkömmlichen Kassette betragen.

Je nach Containertyp, der zum Transport der Kassettenabschnitte verwendet wird, können die Abmessungen der Kassettenabschnitte innerhalb der vorgenannten Grenzen variieren. Beispielsweise können beim Transport die folgenden Containertypen zum Einsatz kommen, an die die Abmessungen der Kassettenabschnitte entsprechend angepasst werden müssen:

| Containertyp | Länge innen (mm) | Breite innen (mm) | Höhe innen (mm) |
|---|---|---|---|
| 20' Standard | 5.918 | 2.330 | 2.356 |
| 40' Standard | 12.015 | 2.330 | 2.389 |
| 40' High Cube | 12.033 | 2.350 | 2.700 |
| 20' insulated reefer | 5.677 | 2.236 | 2.077 |
| 20' non-insulated reefer | 5.480 | 2.248 | 2.247 |
| 20' Open Top | 5.885 | 2.319 | 2.366 |
| 40' Open Top | 12.017 | 2.333 | 2.318 |
| 20' Flat Rack | 5.900 | 2.397 | 2.303 |
| 40' Flat Rack | 12.035 | 2.335 | 2.315 |
| 45' High cube | 13.556 | 2.345 | 2.695 |
| 48' Standard | 14.450 | 2.345 | 2.695 |

Im Wesentlichen ist hierbei zu unterscheiden zwischen Containern mit Abmessungen von 20' (20 Fuss) und 40' (40 Fuss) und größer. Ferner ist erfindungsgemäß vorgesehen, dass wenigstens zwei Kassettenabschnitte im Bereich einer Trennstelle miteinander schweißnahtfrei verbindbar sind. Sofern seitlich vorstehende Kassettenelemente vorgesehen sind, können diese über eine Trennstelle mit der zugeordneten Seitenwand der Kassette in Verbindung stehen. Damit der Innenraum der Kassette, insbesondere bei einem Befüllen des Hohlraums zwischen ggf. vorgesehenen Innenwandungen und Außenwandungen gegenüber dem flüssigen Beton abgedichtet ist, ist im Bereich der Trennstelle eine Dichtung vorgesehen. Die Dichtung kann zwischen den zwei Kassettenabschnitten und/oder zwischen einem Kassettenabschnitt und einem Kassettenelement vorgesehen sein. In einer Kassettenquerschnittsebene gesehen, ist diese Dichtung vorzugsweise im Bereich der Trennstelle umlaufend angeordnet. Auf diese Weise können die beiden Kassettenabschnitte und/oder die Kassettenelemente getrennt zum jeweiligen Benutzungsort transportiert werden und vor Ort zu einer "einteiligen" Kassette zusammengesetzt werden. Dadurch, dass die Dichtung umlaufend angeordnet ist, d.h. die gesamte Trennstelle abdeckt, ist der Innenraum der Kassette vollkommen dicht ausgebildet. In der Kassetten-Querschnittsebene gesehen, weist die Kassette in der Umlaufrichtung mehrere Abschnitte auf, so dass auch die Dichtung in der Umlaufrichtung der Trennstelle gesehen, vorzugsweise mehrere Dichtungsabschnitte aufweist. Die Dichtung ist also vorzugsweise nicht einteilig, sondern mehrteilig ausgebildet.

Die Dichtung bzw. ein Dichtungsabschnitt umfasst vorzugsweise zwei miteinander verbindbare Dichtungsteile. Diese Dichtungsteile können an einer Kassettenwandung, insbesondere an einer der Außenwandung zugewandten Seite der Innenwandung oder des Bodens angeordnet sein. Auf diese Weise ist gewährleistet, dass der Innenraum der Kassette dicht gegenüber der Betonbefüllung des Hohlraums zwischen der Innenwandung und der Außenwandung abgedichtet ist. Unter dem Begriff "Kassettenwandung" wird vorliegend jeglicher Wandbereich der Kassette verstanden, der zum Abdichten eines Innenraums der Kassette mit einer Dichtung versehen sein muss. Darunter fallen insbesondere die Seitenwände aber auch der Boden und sonstige Bereiche der Kassette, die mit einer Dichtung versehen sein können. Die Dichtungsteile sind vorzugsweise an den Kassettenabschnitten angeschweißt. Im Querschnitt betrachtet können die Dichtungsabschnitte bzw. die Dichtung labyrinthartig ausgestaltet sein. Ein einzelnes Dichtungsteil ist im Querschnitt betrachtet vorzugsweise im Wesentlichen L-förmig ausgebildet. Im zusammengefügten Zustand der beiden Dichtungsteile ergibt sich dann ein im Wesentlichen T-förmiger Querschnitt der Dichtung. Die beiden Dichtungsteile können, wenn die beiden Kassettenabschnitte am Einsatzort zusammengefügt werden, einfach miteinander verschraubt werden. Auf diese Weise ist erfindungsgemäß ein schweißnahtfreies Verbinden der beiden Kassettenabschnitte am Einsatzort möglich. Zwischen zwei Dichtungsteilen kann jeweils ein zusätzliches Dichtelement vorgesehen sein. Dieses zusätzliche Dichtelement kann beispielsweise als Dichtband, vorzugsweise auf Bitumenbasis, ausgebildet sein. Hierdurch ergibt sich eine noch verbesserte Abdichtung gegenüber der Betonfüllung.

Um eine parallele Ausrichtung der beiden Dichtungsteile und damit der beiden Kassettenabschnitte zueinander zu erreichen, wenn die beiden Kassettenabschnitte am Einsatzort zusammengesetzt werden sollen, weist mindestens eines der Dichtungsteile vorzugsweise ein Stahlprofil auf. Das Stahlprofil kann im Querschnitt der Dichtung betrachtet rechteckig ausgebildet sein. Weiterhin ist es vorzugsweise länglich ausgebildet und erstreckt sich zumindest abschnittsweise entlang der Umlaufrichtung der Trennstelle. In der Umlaufrichtung gesehen, erstreckt sich das Stahlprofil vorzugsweise über die gesamte Länge eines Dichtungsabschnitts.

Weiterhin ist zur Ausrichtung der beiden Kassettenabschnitte zueinander ein Führungselement besonders vorteilhaft, welches an der der Kassettenwandung abgewandten Seite des Dichtungsteils angeordnet sein kann. Das Führungselement sorgt für eine optimale Positionierung und Ausrichtung der beiden Kassettenabschnitte zueinander und ist vorzugsweise an dem Dichtungsteil angeschweißt. Jeder Dichtungsabschnitt weist mindestens ein Führungselement auf, welches im Querschnitt betrachtet über beide Seiten des Dichtungsteils (in der Längsrichtung des Kassettenabschnitts gesehen) hinaus stehen kann. Auf diese Weise ist eine sichere Befestigung des Führungselements, insbesondere durch Verschweißen an dem Dichtungsteil möglich. Insbesondere ist das Führungselement also unsymmetrisch in Bezug auf das Dichtungsteil angeordnet, so dass sich im Querschnitt betrachtet eine im Wesentlichen Z-förmige Ausbildung der Dichtung bzw. des Dichtungsabschnitts resultiert.

Um die Dichtigkeit der im Bereich der Trennstelle miteinander verbundenen Kassettenabschnitte zu erhöhen, kann darüber hinaus vorgesehen sein, dass eines der beiden Dichtteile in der Längsrichtung der Kassette bzw. des Kassettenabschnitts gesehen in einem Abstand über eine Kante der Kassettenwandung übersteht und das zugehörige andere Dichtungsteil im selben Abstand hinter einer Kante der zugehörigen anderen Kassettenwandung zurückversetzt ist. Auf diese Weise ergibt sich wiederum ein labyrinthförmiger Verlauf der Dichtung, wodurch die Dichtigkeit zwischen dem Innenraum der Kassette und dem Hohlraum zwischen der Innenwandung und Außenwandung der Kassette erhöht wird. An der Trennstelle bzw. Verbindungsstelle der beiden Kassettenabschnitte kann darüber hinaus eine Silikonfuge zwischen den Kassettenwandungen vorgesehen sein. Auch hierdurch wird die Dichtigkeit der Trennstelle insgesamt erhöht, wenn die beiden Kassettenabschnitte am Bestimmungsort zusammengesetzt werden.

Zur Lösung der oben genannten Aufgabe wird auch eine Montage- und Reparatureinrichtung mit den Merkmalen des Anspruchs 1 vorgeschlagen. Die Montage- und Reparatureinrichtung dient insbesondere für Fahrzeuge, insbesondere Bau- und Nutzfahrzeuge, und umfasst insbesondere eine in eine Bodenausnehmung einsetzbare Kassette aus Stahl od. dgl. korrosionsbeständigem Material mit zwei Längsseitenwänden, endseitig angeordneten Stirnseitenwänden und einem Boden, wobei zumindest die Seitenwände ggf. jeweils eine Innenwandung und eine im Abstand dazu angeordnete Außenwandung aufweisen, die einen Hohlraum für die Aufnahme von einem aushärtbaren Füllmaterial begrenzen, und wobei ggf. seitlich über die Seitenwände vorstehende Kassettenelemente zur Aufnahme von Laufrollen einer Bremsprüfvorrichtung oder dgl. vorgesehen sind. Die Kassette ist in wenigstens zwei Kassettenabschnitte unterteilt und die Montage- und Reparatureinrichtung zeichnet sich dadurch aus, dass die wenigstens zwei Kassettenabschnitte im Bereich einer Trennstelle miteinander verbindbar sind. Die Montage- und Reparatureinrichtung gemäß der Erfindung ist nicht auf bestimmte Abmessungen der Kassettenteile beschränkt. Vorteilhafte Ausgestaltungen der Trennstelle sind in den abhängigen Ansprüchen beschrieben.

Die Montage- und Reparatureinrichtung gemäß Anspruch 2 zeichnet sich dadurch aus, dass bei seitlich vorstehenden Kassettenelementen diese über eine Trennstelle mit der zugeordneten Seitenwand der Kassette in Verbindung stehen. Auch diese Montage- und Reparatureinrichtung gemäß der Erfindung ist nicht auf bestimmte Abmessungen der Kassettenteile beschränkt.

Die Erfindung wird im Folgenden anhand der Zeichnung näher erläutert. Es zeigen:
- Fig. 1: eine Stirnseitenansicht eines Kassettenabschnitts;
- Fig. 2: eine Schnittdarstellung einer Dichtung zum dichten Verbinden zweier Kassettenabschnitte im Bereich einer Trennstelle;
- Fig. 3: die Dichtung gemäß Fig. 2 im zusammengefügten Zustand; und
- Fig. 4: eine Längsseitendarstellung zweier im Bereich einer Trennstelle miteinander zu verbindenden Kassettenabschnitte.

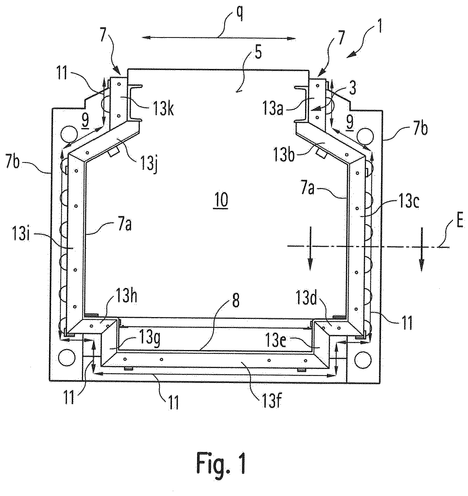

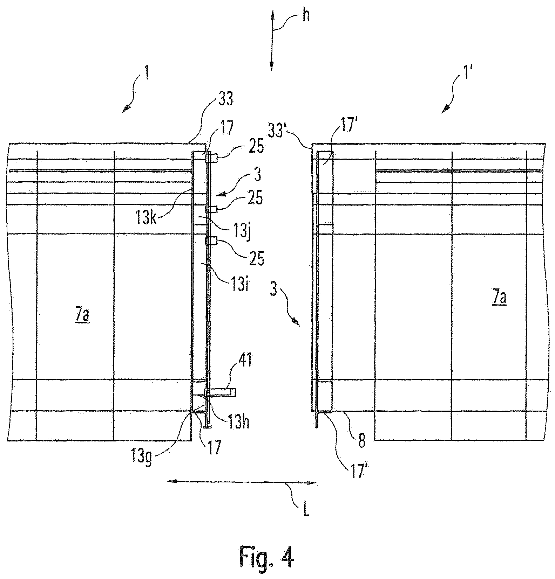

Die Fig. 1 zeigt eine Stirnseitenansicht eines Kassettenabschnitts 1, der dazu vorgesehen ist, mit einem zweiten Kassettenabschnitt (s. Fig. 4) im Bereich einer Trennstelle 3 verbunden zu werden. Die Trennstelle 3 bildet gleichzeitig einen Verbindungsbereich, wenn die beiden Kassettenabschnitte miteinander verbunden sind. Eine entsprechende Trennstelle 3 kann auch zwischen einer Seitenwand eines Kassettenabschnitts und eines seitlich überstehenden Kassettenelements (in der Fig. nicht gezeigt) vorgesehen sein. Nachfolgend wird die Trennstelle und eine entsprechende Dichtung anhand der Kassettenabschnitte erläutert.

Der Kassettenabschnitt 1 ist in eine Bodenausnehmung einsetzbar und umfasst eine Stirnseitenwand 5 sowie zwei Längsseitenwände 7, die jeweils eine Innenwandung 7a und eine im Abstand dazu angeordnete Außenwandung 7b aufweisen. Zwischen der Innenwandung und der Außenwandung ist ein Hohlraum 9 für die Aufnahme eines aushärtbaren Füllmaterials wie Beton vorgesehen. Ferner weißt der Kassettenabschnitt einen Boden 8 auf.

Damit im Bereich der Trennstelle 3 kein flüssiges Füllmaterial in den Innenraum 10 der Kassette eindringt, wenn der Kassettenabschnitt 1 mit einem weiteren Kassettenabschnitt im Bereich der Trennstelle 3 verbunden wird, ist es notwendig, den Verbindungsbereich der beiden Kassettenabschnitte abzudichten. Es sei an dieser Stelle klargestellt, dass eine Kassette auch mehr als zwei Kassettenabschnitte aufweisen kann, je nach gewünschter Gesamtlänge der Kassette, wobei sich die Längsrichtung der Kassette in eine Richtung senkrecht zur Zeichenebene der Fig. 1 erstreckt und in Fig. 4 mit dem Bezugszeichen L gekennzeichnet ist. Die Kassette umfasst in diesem Fall mehr als zwei Trennstellen 3 und somit auch mehrere Verbindungsbereiche, die entsprechend abgedichtet werden müssen.

Die Abdichtung des Verbindungsbereiches zwischen zwei Kassettenabschnitten muss entlang des gesamten Umfangs der Trennstelle erfolgen, wobei die Umlaufrichtung in der Fig. 1 mit dem Pfeil 11 gekennzeichnet ist. Die Dichtung muss sich folglich in der Umlaufrichtung 11 über die gesamte Trennstelle eines Kassettenabschnitts erstrecken. Hierzu ist die Dichtung vorzugsweise mehrteilig ausgebildet und weist folglich mehrere Dichtungsabschnitte 13a - 13k auf, die mit der Kassettenwandung, insbesondere mit der Innenwandung 7a und dem Boden 8 des Kassettenabschnitts 1 verbunden sind. Die Dichtungsabschnitte 13a - 13k bilden zusammen die Dichtung, die zum vollständigen Abdichten des Innenraums 10 gegenüber dem flüssigen Füllmaterial in dem Hohlraum 9 benötigt wird.

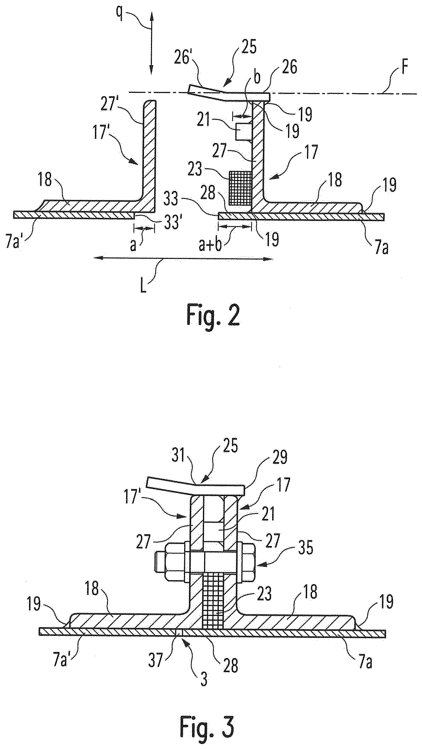

Die Fig. 2 zeigt eine Querschnittdarstellung einer Dichtung 15, wie sie in vorteilhafter Weise zur Abdichtung eines Verbindungsbereichs zweier Kassettenabschnitte verwendet werden kann. Die in Fig. 2 abgebildete Querschnittdarstellung erstreckt sich in einer Ebene, die einer in Fig. 1 gezeigten Ebene E entspricht, die sich senkrecht zur Zeichenebene erstreckt. Die Dichtung 15 umfasst zwei zusammenwirkende Dichtungsteile 17 und 17', wobei ein Dichtungsteil 17 beispielhaft an einer Seitenfläche der Innenwandung 7a angeordnet ist, welche der Außenwandung 7b der Kassette zugewandt ist. Das zweite Dichtungsteil 17' ist an einer entsprechenden Seitenfläche der Innenwandung 7a' eines zweiten Kassettenabschnitts angeordnet. Ein Schenkel 18 der Dichtungsteile 17 und 17' ist jeweils vorzugsweise mit den jeweiligen Kassettenwandungen verschweißt. Die entsprechenden Schweißnähte 19 sind in der Fig. 2 gut erkennbar. Die Dichtungsteile 17 und 17' sind winkelig ausgebildet und werden vorzugsweise durch L-Profile gebildet, d.h. der Winkel zwischen den Schenkeln des Dichtungsteils beträgt im Wesentlichen 90°. Die Dichtungsteile sind vorzugsweise aus Metall, insbesondere aus Stahl ausgebildet und bilden gemeinsam die in Fig. 1 gezeigten Dichtungsabschnitte 13. Je nach Einsatzgebiet im Bereich der Trennstelle 3 sind die Dichtungsteile folglich unterschiedlich lang ausgebildet.

Das Dichtungsteil 17 umfasst ein Stahlprofil 21, welches sich senkrecht zur Zeichenebene im Wesentlichen parallel zu der Kassettenwandung 7a erstreckt und an dem Dichtungsteil angebracht, insbesondere angeschweißt ist. Das Stahlprofil 21 ist dabei an derjenigen Seite des Dichtungsteils 17 angebracht, welches dem zugehörigen, gegenüber liegenden Dichtungsteil 17' zugewandt ist. Wie in der Fig. 3 erkennbar ist, sorgt das Stahlprofil 21 für eine parallele Ausrichtung in der Kassetten-Querrichtung q der beiden Dichtungsteile und damit der beiden miteinander zu verbindenden Kassettenabschnitte zueinander. Darüber hinaus hat es einen Dichteffekt im Zusammengefügten Zustand der Dichtungsteile 17 und 17'. Das Stahlprofil erstreckt sich vorzugsweise über die gesamte Länge des Dichtungsteils 17 (in der Höhenrichtung h bzw. senkrecht zu Bildebene gemäß Fig. 2 betrachtet).

Zusätzlich kann zwischen dem ersten und dem zweiten Dichtungsteil 17 und 17' noch ein Dichtelement 23 angeordnet sein, welches vorzugsweise verformbar ausgebildet ist. Bei dem Dichtelement 23 kann es sich um ein dichtendes Material, beispielsweise auf Bitumenbasis handeln. Es kann dann während der Hydration mit dem flüssigen Beton "verschmelzen" und ist damit besonders gut zum Abdichten des Innenraums 10 der Kassette gegenüber einem flüssigen Füllmaterial wie Beton geeignet. In dem Ausführungsbeispiel nach Fig. 2 ist das zusätzliche Dichtelement 23 als Dichtband ausgebildet, welches an dem Dichtungsteil 17 angebracht ist. Das Dichtband ist vorzugsweise länglich ausgebildet und erstreckt sich senkrecht zu der Zeichenebene gemäß Fig. 2 in die Bildebene hinein, welche der in Fig. 1 gezeigten Umfangsrichtung der Trennstelle 3 entlang des Pfeils 11 entspricht. Es erstreckt sich vorteilhafter Weise über die gesamt Länge des Dichtungsteils 17 (in der Höhenrichtung h bzw. senkrecht zu Bildebene gemäß Fig. 2 betrachtet).

Die Dichtung 15 umfasst noch ein Führungselement 25, welches zur Ausrichtung der beiden Kassettenabschnitte zueinander in der Kassetten-querrichtung q dient. Wie in der Fig. 2 erkennbar ist, ist das Führungselement 25 unsymmetrisch bezüglich des Dichtungsteils 17 angeordnet, so dass sich, im Querschnitt gemäß Fig. 2 betrachtet, ein im Wesentlichen Z-förmiger Verlauf des Führungselements 25 und dem sich anschließenden Dichtungselement 17 ergibt. Das Führungselement 25 kann, wie auch das Stahlprofil 21, an dem Dichtungsteil 17 angeschweißt sein. Es handelt sich bei dem Führungselement 25 vorzugsweise um ein flach ausgebildtes im Wesentlichen rechteckförmiges Blech, welches derart asymmetrisch bezüglich eines sich in der Querrichtung q erstreckenden Schenkels 27 des Dichtungsteils 17 angeordnet ist, dass es zu beiden Seiten über den Schenkel 27 des Dichtungsteils 17 hinaus steht. Durch den resultierenden Überstand 29 des Führungselements 25, der gegenüber einem Überstand 31 wesentlicher kürzer ausgebildet ist, kann das Führungselement 25 besonders gut an dem Schenkel 27 des Dichtungsteils 17 mittels Schweißnähten befestigt werden. Darüber hinaus kann dadurch gewährleistet werden, dass das Führungselement 25 im Bereich 26 parallel zu der Kassettenwandung ausgerichtet ist.

Das Führungselement 25 erstreckt sich in einem ersten Bereich 26 in einer Ebene F, die im Wesentlichen parallel zu der Kassettenwandung, insbesondere zu der Innenwandung 7a ausgerichtet ist. Ein zweiter Bereich 26' des Führungselements 25 ist hingegen gegenüber der Ebene F unter einem Winkel angeordnet. Der zweite Bereich 26' ist dabei dem zweiten Dichtungsteil 17' zugewandt, während der erste Bereich 26 mit dem Schenkel 27 verbunden ist. Das Führungselement 25 ist folglich nach außen hin, d.h. von der Kassettenwandung weg, gebogen. Hierdurch wird ein optimaler Führungs- und Positionierungseffekt des Führungselements 25 bewerkstelligt, wenn die beiden Kassettenabschnitte und damit die beiden Dichtungsteile 17 und 17' aufeinander zu bewegt werden.

Die Fig. 2 macht noch deutlich, dass die Dichtungsteile 17 und 17' bezüglich ihrer zugeordneten Kassettenwandungen 7a und 7a' asymmetrisch angeordnet sind. Insbesondere ist das Dichtungsteil 17 bezüglich der Innenwandung 7a derart angeordnet, dass es von einer Kante 33, welche die Trennstelle 3 gemäß Fig. 1 bildet, in einem Abstand a + b angeordnet ist, wobei b die Breite des Stahlprofils 21 in der Längsrichtung L ist und a der Abstand zwischen dem Stahlprofil und eine Kante 33 der Innenwandung 7a. Das Dichtungsteil 17 ist also im Abstand a + b parallel zu der Kante 33 der Innenwandung 7a angeordnet. Demgegenüber ist das zugehörige zweite Dichtungsteil 17' bezüglich der Innenwandung 7a' des gegenüber liegenden Kassettenabschnitts derart angeordnet, dass es über die Kante 33' der Innenwandung 7a' im Abstand a hinaus steht. Eine Ebene, in welcher der Schenkel 27' des Dichtungsteils 17' angeordnet ist, ist folglich im Wesentlichen parallel im Abstand a zu der Kante 33' angeordnet. Entsprechendes gilt auch für den Schenkel 27 des Dichtungsteils 17. Es versteht sich, dass die Positionierung der Dichtungsteile 17 und 17' genau umgekehrt sein kann, d.h. das Dichtungsteil 17 kann überstehend angeordnet sein, während das Dichtungsteil 17' zurückversetzt ist gegenüber der Kante.

Die beiden Schenkel 27 und 27' sind vorzugsweise gleich lang in der Querrichtung q ausgebildet. Dadurch, dass der Abstand zwischen dem ersten Bereich 26 des Führungselements 25 und einem Randbereich 28 zwischen dem Schenkel 27 und der Kante 33 der Länge des Schenkels 27' entspricht, wird durch den Randbereich 28, den Schenkel 27 und den Bereich 26 des Führungselements 25 quasi eine U-förmige Aufnahme- und Positionierungsmulde für den Schenkel 27' gebildet. Das Stahlprofil 21, welches in der U-förmigen Mulde angeordnet ist, dient dabei quasi als Anschlagelement für den Schenkel 27'. Es entsteht somit ein Freiraum mit der Breite b (in der Längsrichtung L gesehen) zwischen den beiden Schenkeln 27, 27', der zur Aufnahme des Dichtelements 23 dienen kann.

Die Fig. 3 zeigt die Dichtung 15 gemäß Fig. 2 in einem zusammengefügten Zustand. Gleiche Teile sind mit gleichen Bezugszeichen versehen, so dass insofern auf die Beschreibung zu den vorangegangenen Figuren verwiesen wird.

Die beiden Dichtungsteile 17 und 17' sind mittels eines Verbindungselements 35, in Fig. 3 rein beispielhaft mittels einer Schraube und einer zugehörigen Mutter, miteinander verbunden. Im verbundenen Zustand sind die beiden Dichtungsteile, die als Dichtungswinkel ausgebildet sind, mittels des Stahlprofils 21 parallel zueinander ausgerichtet. Während das Stahlprofil 21 für eine parallele Ausrichtung der beiden Schenkel 27 und 27' der Dichtungsteile sorgt, wird durch das Verbindungselement 35 und das Führungselement 25 eine optimale Ausrichtung der beiden Dichtungsteile und damit der beiden Kassettenabschnitte zueinander in der Kassetten-Querrichtung q erreicht. Die Dichtungsteile 17 und 17', das Führungselement 25, das Stahlprofil 21 und das Dichtelement 23 bilden gemeinsam die Dichtung 15 bzw. einen Dichtungsabschnitt 13. Das verformbare Dichtelement 23 wird im zusammengefügten Zustand der Dichtungsteile 17 und 17' zusammengepresst und füllt dadurch den Hohlraum zwischen dem Stahlprofil 21 und dem Randbereich 28 der Innenwandung 7a aus.

Zur Aufnahme des Verbindungselements 35 umfasst jedes der Dichtungsteile entsprechende Ausnehmungen, die derart aufeinander abgestimmt sein müssen, dass im zusammengefügten Zustand der Dichtungsteile auch die beiden Innenwandungen 7a und 7a' miteinander fluchten, als ob die Kassette einteilig ausgebildet wäre. Im Bereich der Trennstelle 3, die in der Fig. 3 gleichzeitig den Verbindungsbereich zwischen den beiden Kassettenabschnitten bildet, kann noch eine weitere Abdicht-Maßnahme in Form einer Silikonfuge 37 vorgesehen sein, die sich vorzugsweise entlang der gesamten Umlaufrichtung 11 (s. Fig. 1) erstreckt.

Die Montage zweier Kassettenabschnitte erfolgt derart, dass diese in eine gemeinsame Bodenausnehmung eingesetzt werden und mit Hilfe der Führungselemente 25 der einzelnen Dichtungsabschnitte 13a - 13k derart zueinander positioniert werden, dass die Verbindungselemente 35 die Dichtungsteile fest miteinander verbinden können. Es kann dann lediglich noch vorgesehen sein, dass im Bereich der Trennstelle 3 bzw. im Bereich des Verbindungsbereichs die Silikonfuge 37 zwischen den beiden Innenwandungen 7a, 7a' der beiden Kassettenabschnitte angebracht wird. Auf diese Weise ist ein schweißnahtfreies Verbinden der beiden Kassettenabschnitte möglich, wobei die Verbindung absolut dicht erfolgt. Nach dem Ausfüllen des Hohlraums 9 zwischen der Innen- und Außenwandung mit flüssigem Beton ist die Dichtung 15 von Beton umgeben. Sofern Beton in den Hohlraum zwischen den beiden Schenkeln 27 und 27' eindringt, wird dieser von dem Dichtelement 23 aufgehalten und verschmilzt vorzugsweise mit diesem.

Der labyrinthartige Aufbau der Dichtung 15 verhindert insgesamt, dass flüssiges Beton aus dem Hohlraum 9 in den Innenraum 10 der Kassette fließt. Der labyrinthartige Aufbau der Dichtung 15 ergibt sich dabei dadurch, dass sich die Dichtung 15 labyrinthartig ausgehend von der Innenwandung 7a entlang der Schenkel der Dichtungsteile 17, 17', über das Führungselement 25, weiter zu dem Stahlprofil 21 und von dort aus über das zusätzliche Dichtelement 23 bis zu der Silikonfuge 37 erstreckt.

Die Fig. 2 und 3 zeigen die Dichtung 15 beispielhaft in Kombination mit einer Innenwandung 7a der Kassette. Es versteht sich jedoch, dass die Dichtung 15 an jeglichem Bereich der Kassette anbringbar ist, den es zu verbinden gilt. Beispielsweise muss die Dichtung 15 auch mit dem Boden 8 verschweißt werden, um eine umlaufende Abdichtung der Trennstelle 3 zu gewährleisten.

Die Fig. 4 zeigt eine Längsseiten-Darstellung zweier Kassettenabschnitte 1 und 1' in einem nicht zusammengefügten Zustand. Die Figur macht deutlich, dass der Kassettenabschnitt 1 ein Dichtungsteil 17 aufweist, weiches sich in der Höhenrichtung h des Kassettenabschnitts erstreckt. Der Kassettenabschnitt 1' umfasst hingegen das zugehörige Gegenstück, nämlich das Dichtungsteil 17', welches sich ebenfalls in der Höhenrichtung h des Kassettenabschnitts 1' erstreckt. Im zusammengesetzten Zustand bilden die beiden Kassettenabschnitte 1 und 1' eine Kassette, sofern nicht noch weitere Kassettenabschnitte vorgesehen sind. Entscheidend ist, dass keiner der Kassettenabschnitte 1, 1' länger ist als eine maximal erlaubte Länge, die straßenseitig mittels eines Schwertransports transportierbar ist.

Wie in der Fig, 1 erkennbar ist, ist der Verlauf der Längsseitenwand 7 bzw. 7' der Kassette in der Umfangsrichtung 11 nicht linear, sondern vielmehr winkelig ausgebildet ist, so dass die Dichtung 15 zweckmäßigerweise in die mehreren Dichtungsabschnitte 13a - 13k unterteilt ist. Ein Dichtungsabschnitt 13a - 13k weist mindestens ein Führungselement 25 auf, welches beispielsweise ca. 7-8 cm lang sein kann (in der Höhenrichtung h gesehen). Das Führungselement muss sich also nicht über die gesamte Länge eines Dichtungsabschnitts erstrecken. Es versteht sich, dass das Führungselement 25 auch länger ausgebildet sein kann und sich insbesondere über die gesamt Länge des Dichtungsteils und damit des Dichtungsabschnitts erstrecken kann. Alternativ können stattdessen mehrere kürzere Führungselemente 25 an einem Dichtungsabschnitt angebracht sein. Im Bereich der Ecken 39 der Trennstelle 3 bzw. der Kante 33 können die Dichtungsteile im Übrigen mit zusätzlichen Führungselementen 41 versehen sein.

Insgesamt wird durch die vorliegende Erfindung eine vorteilhafte Montage- und Reparatureinrichtung für Fahrzeuge, Insbesondere Bau- und Nutzfahrzeuge geschaffen, welche wenigstens zwei Kassettenabschnitte 1, 1' aufweist, von denen jeder höchstens die zulässigen Gesamtabmessungen für den Transport aufweist. Durch das vorteilhafte Dichtelement, welches vorstehend beschrieben wurde, ist darüber hinaus eine gegenüber dem flüssigen Füllmaterial des Hohlraums zwischen der Innenwandung und der Außenwandung der Kassette eine zuverlässige Abdichtung des Innenraums der Kassette gewährleistet. Diese wird insbesondere durch den labyrinthartigen Aufbau der Dichtung 15 bewerkstelligt. Darüber hinaus wird eine optimale Ausrichtung der beiden Kassettenabschnitte zueinander in den drei Dimensionen dadurch erreicht, dass einerseits ein Stahlprofil vorgesehen ist, welches für eine parallele Ausrichtung der beiden Dichtungsteile zueinander sorgt. Andererseits wird durch die Führungselemente die Positionierung erleichtert. Schließlich wird die Ausrichtung der beiden Kassettenabschnitte zueinander dadurch optimiert, dass das Dichtelement entlang der gesamten Umlaufrichtung 11 der Trennstelle 3 vorgesehen ist.

### Bezugszeichenliste:

- 1, 1': Kassettenabschnitt
- 3: Trennstelle
- 5: Stirnseitenwand
- 7, 7': Längsseitenwand
- 7a, 7a': Innenwandung
- 7b: Außenwandung
- 8: Boden
- 9: Hohlraum
- 10: Innenraum Kassette
- 11: Umlaufrichtung
- 13a-13k: Dichtungsabschnitte
- 15: Dichtung
- 17, 17': Dichtungsteile
- 18: Schenkel
- 19: Schweißnaht
- 21: Stahlprofil
- 23: Dichtelement
- 25: Führungselement
- 26, 26': erster, zweiter Bereich
- 27, 27': Schenkel
- 28: Randbereich
- 29: Überstand
- 31: Überstand
- 33, 33': Kante
- 35: Verbindungselement
- 37: Silikonfuge
- 39: Ecken
- 41: zusätzliches Führungselement
- q: Kassetten-Querrichtung
- a: Abstand
- h: Höhenrichtung
- b: Breite
- L: Längsrichtung
- E, F: Ebene

## Patentansprüche

1. Montage- und Reparatureinrichtung für Fahrzeuge, insbesondere Bau- und Nutzfahrzeuge, umfassend eine in eine Bodenausnehmung einsetzbare Kassette aus Stahl oder dergleichen korrosionsbeständigem Material mit zwei Längsseitenwänden (7), endseitig angeordneten Stirnseitenwänden (5) und einem Boden (8), wobei zumindest die Seitenwände ggf. jeweils eine Innenwandung (7a) und eine im Abstand dazu angeordnete Außenwandung (7b) aufweisen, die einen Hohlraum (9) für die Aufnahme von einem aushärtbaren Füllmaterial begrenzen, und wobei ggf. seitlich über die Seitenwände vorstehende Kassettenelemente zur Aufnahme von Laufrollen einer Bremsprüfvorrichtung oder dgl. vorgesehen sind, und wobei ferner die Kassette in
in wenigstens zwei Kassettenabschnitte (1, 1') unterteilt ist, die wenigstens zwei Kassettenabschnitte (1, 1') im Bereich einer Trennstelle (3) miteinander verbindbar sind, und die wenigstens zwei Kassettenabschnitte (1, 1') im Bereich der Trennstelle (3) eine Dichtung (15) aufweisen,
**dadurch gekennzeichnet, dass**
die Abmessungen der der wenigstens zwei Kassettenabschnitte (1, 1') wie folgt sind:
Länge (L1) ≤ 6.000 mm
Breite (B1) ≤ 2.400 mm
Höhe (H1) ≤ 2.400 mm
bzw.
Länge (L2) ≤ 14.500 mm
Breite (B2) ≤ 2.400 mm
Höhe (H2) ≤ 2.700 mm
und dass die wenigstens zwei Kassettenabschnitte (1, 1') mittels der Dichtung (15) schweißnahtfrei miteinander verbindbar sind.

2. Montage- und Reparatureinrichtung, nach Anspruch 1
**dadurch gekennzeichnet, dass**
bei seitlich vorstehenden Kassettenelementen diese über eine Trennstelle mit der zugeordneten Seitenwand der Kassette in Verbindung stehen.

3. Montage- und Reparatureinrichtung nach Anspruch 1 oder 2,
**dadurch gekennzeichnet, dass**
die Dichtung (15) im Bereich der Trennstelle (3), in einer Kassettenquerschnittsebene gesehen, umlaufend angeordnet ist.

4. Montage- und Reparatureinrichtung nach Anspruch 1 oder 3,
**dadurch gekennzeichnet, dass**
die Dichtung (15) in der Umlaufrichtung (11) der Trennstelle (3) gesehen, mehrere Dichtungsabschnitte (13a-13k) aufweist.

5. Montage- und Reparatureinrichtung nach einem der vorhergehenden Ansprüche 1 bis 4,
**dadurch gekennzeichnet, dass**
die Dichtung (15) bzw. ein Dichtungsabschnitt (13a-13k) zwei miteinander verbindbare Dichtungsteile (17, 17') umfasst.

6. Montage- und Reparatureinrichtung nach Anspruch 5,
**dadurch gekennzeichnet, dass**
die Dichtungsteile (17, 17') an einer Kassettenwandung, insbesondere an einer der Außenwandung (7n) zugewandten Seite der Innenwandung (7a) und des Bodens (8) angeordnet sind.

7. Montage- und Reparatureinrichtung nach Anspruch 5 oder 6,
**dadurch gekennzeichnet, dass**
die Dichtungsteile (17, 17') an den Kassettenabschnitten (1, 1') angeschweißt sind.

8. Montage- und Reparatureinrichtung nach einem der vorhergehenden Ansprüche 1 bis 7,
**dadurch gekennzeichnet, dass**
die Dichtung (15) bzw. die Dichtungsabschnitte (13a-13k) im Querschnitt gesehen labyrinthartig ausgebildet ist.

9. Montage- und Reparatureinrichtung nach einem der vorhergehenden Ansprüche 1 bis 8,
**dadurch gekennzeichnet, dass**
die Dichtungsteile (17, 17') im Querschnitt betrachtet im Wesentlichen L-förmig ausgebildet sind.

10. Montage- und Reparatureinrichtung nach einem der vorhergehenden Ansprüche 5 bis 9,
**dadurch gekennzeichnet, dass**
die Dichtungsteile (17, 17') im zusammengefügten Zustand eine im Querschnitt betrachtet T-förmige Dichtung (15) bilden.

11. Montage- und Reparatureinrichtung nach einem der vorhergehenden Ansprüche 5 bis 10,
**dadurch gekennzeichnet, dass**
die beiden Dichtungsteile (17, 17') miteinander verschraubt sind.

12. Montage- und Reparatureinrichtung nach einem der vorhergehenden Ansprüche 5 bis 11,
**dadurch gekennzeichnet, dass**
zwischen den zwei Dichtungsteilen (17, 17') ein zusätzliches Dichtelement (23), insbesondere ein Dichtband, vorzugsweise auf Bitumenbasis, angeordnet ist.

13. Montage- und Reparatureinrichtung nach einem der vorhergehenden Ansprüche 5 bis 12,
**dadurch gekennzeichnet, dass**
wenigstens eines der Dichtungsteile (17) zumindest bereichsweise mit einem im Querschnitt betrachtet rechteckigen Stahlprofil (21) verbunden ist, welches im zusammengefügten Zustand der Dichtung (15) bzw. der Kassettenteile (1, 1') an dem jeweils anderen Dichtungsteil (17, 17') anliegt.

14. Montage- und Reparatureinrichtung nach Anspruch 13,
**dadurch gekennzeichnet, dass**
das Stahlprofil (21) länglich ausgebildet ist und sich zumindest abschnittsweise entlang der Umlaufrichtung (11) der Trennstelle (3) erstreckt.

15. Montage- und Reparatureinrichtung nach einem der vorhergehenden Ansprüche 5 bis 14,
**dadurch gekennzeichnet, dass**
wenigstens eines der Dichtungsteile (17, 17') mindestens ein Führungselement (25) aufweist, welches an der der Kassettenwandung (7a, 8) abgewandten Seite des Dichtungsteils (17, 17') angeordnet ist.

16. Montage- und Reparatureinrichtung nach Anspruch 15,
**dadurch gekennzeichnet, dass**
das Führungselement (25) an dem Dichtungsteil (17, 17') angeschweißt ist.

17. Montage- und Reparatureinrichtung nach Anspruch 15 oder 16,
**dadurch gekennzeichnet, dass**
jeder Dichtungsabschnitt (13a-13k) mindestens ein Führungselement (25) aufweist.

18. Montage- und Reparatureinrichtung nach einem der vorhergehenden Ansprüche 15 bis 17,
**dadurch gekennzeichnet, dass**
das Führungselement (25) im Querschnitt betrachtet über beide Seiten eines Schenkels (27) des Dichtungsteils (17) hinaussteht.

19. Montage- und Reparatureinrichtung nach einem der vorhergehenden Ansprüche 5 bis 18,
**dadurch gekennzeichnet, dass**
eines der beiden Dichtungsteile (17') in der Längsrichtung (L) der Kassette gesehen, in einem Abstand über eine Kante (33') der Kassettenwandung (7a, 8) übersteht und das zugehörige andere Dichtungsteil (17) im selben Abstand hinter eine Kante (33) der Kassettenwandung (7a, 8) zurückversetzt ist.

20. Montage- und Reparatureinrichtung nach einem der vorhergehenden Ansprüche 5 bis 18,
**dadurch gekennzeichnet, dass**
das Führungselement (25), ein Schenkel (27) des Dichtungsteils (17) und ein Randbereich (28) der Kassettenwandung (7a, 8) eine im Wesentlichen U-förmige Aufnahmemulde zur Aufnahme eines Schenkels (27') des jeweils anderen Dichtungsteils (17') bilden.

21. Montage- und Reparatureinrichtung nach einem der vorhergehenden Ansprüche,
**dadurch gekennzeichnet, dass**
die beiden Kassettenteile (1, 1') an der Trennstelle (3) eine Silikonfuge (37) aufweisen.

## Claims

1. An assembly and repair device for vehicles, in particular construction and utility vehicles, comprising a cassette made of steel or a similar corrosion-proof material which can be inserted in a floor recess and has two longitudinal side walls (7), front side walls (5) arranged at the end side, and a bottom (8), wherein at least the side walls optionally each exhibit an inner wall (7a), and an outer wall (7b) arranged at a distance thereto which delimit a hollow space (9) for receiving a curable filling material, and wherein optionally cassette elements laterally protruding beyond the side walls are provided for receiving track rollers of a brake testing device or the like, and wherein the cassette is furthermore subdivided into at least two cassette portions (1, 1'), the at least two cassette portions (1, 1') can be connected to one other in the area of a separating point (3), and the at least two cassette portions (1, 1') exhibit a sealing (15) in the area of the separating point (3),
**characterized in that**
the dimensions of the at least two cassette portions (1, 1') are as follows:
length (L1) ≤ 6,000 mm
width (B1) ≤ 2,400 mm
height (H1) ≤ 2,400 mm,
and
length (L2) ≤ 14,500 mm
width (B2) ≤ 2,400 mm
height (H2) ≤ 2,700 mm,
respectively, and that the at least two cassette portions (1, 1') can be connected to one another by means of the sealing (15) free of any weld seam.

2. The assembly and repair device according to claim 1,
**characterized in that**
in case of laterally protruding cassette elements, these are in communication with the associated side wall of the cassette via a separating point.

3. The assembly and repair device according to claim 1 or 2,
**characterized in that,**
as seen in a cross-sectional plane of the cassette, the sealing (15) is arranged circumferentially in the area of the separating point (3).

4. The assembly and repair device according to claim 1 or 3,
**characterized in that,**
as seen in the separating point's (3) circumferential direction (11), the sealing (15) has several sealing portions (13a - 13k).

5. The assembly and repair device according to any one of the preceding claims 1 to 4,
**characterized in that**
the sealing (15) or a sealing portion (13a - 13k) comprises two sealing parts (17, 17') that can be connected to one another.

6. The assembly and repair device according to claim 5,
**characterized in that**
the sealing parts (17, 17') are arranged on a cassette wall, in particular on a side of the inner wall (7a) and of the bottom (8) facing the outer wall (7n).

7. The assembly and repair device according to claim 5 or 6,
**characterized in that**
the sealing parts (17, 17') are welded to the cassette portions (1, 1').

8. The assembly and repair device according to any one of the preceding claims 1 to 7,
**characterized in that,**
as seen in cross-section, the sealing (15) or the sealing portions (13a - 13k) is/are formed to be labyrinth-like.

9. The assembly and repair device according to any one of the preceding claims 1 to 8,
**characterized in that,**
as viewed in cross-section, the sealing parts (17, 17') are formed to be essentially L-shaped.

10. The assembly and repair device according to any one of the preceding claims 5 to 9,
**characterized in that**
in the assembled state, the sealing parts (17, 17') constitute, as viewed in cross-section, a T-shaped sealing (15).

11. The assembly and repair device according to any one of the preceding claims 5 to 10,
**characterized in that**
the two sealing parts (17, 17') are screwed together.

12. The assembly and repair device according to any one of the preceding claims 5 to 11,
**characterized in that**
an additional sealing element (23), in particular a sealing tape, preferably based on bitumen, is arranged between the two sealing parts (17, 17').

13. The assembly and repair device according to any one of the preceding claims 5 to 12,
**characterized in that**
at least one of the sealing parts (17) at least in areas is connected with, as viewed in cross-section, a rectangular steel profile (21) which in the assembled state of the sealing (15) or the cassette parts (1, 1') rests against the respective other sealing part (17, 17').

14. The assembly and repair device according to claim 13,
**characterized in that**
the steel profile (21) is formed to be oblong and extends at least in portions along the separating point's (3) circumferential direction (11).

15. The assembly and repair device according to any one of the preceding claims 5 to 14,
**characterized in that**
at least one of the sealing parts (17, 17') has at least one guide element (25) which is arranged on the side of the sealing part (17, 17') facing away from the cassette wall (7a, 8).

16. The assembly and repair device according to claim 15,
**characterized in that**
the guide element (25) is welded to the sealing part (17, 17').

17. The assembly and repair device according to claim 15 or 16,
**characterized in that**
each sealing portion (13a - 13k) has at least one guide element (25).

18. The assembly and repair device according to any one of the preceding claims 15 to 17,
**characterized in that,**
as viewed in cross section, the guide element (25) projects beyond both sides of a leg (27) of the sealing part (17).

19. The assembly and repair device according to any one of the preceding claims 5 to 18,
**characterized in that,**
as viewed in the cassette's longitudinal direction (L), one of the two sealing parts (17') protrudes at a distance over an edge (33') of the cassette wall (7a, 8), and the associated other sealing part (17) is offset back behind an edge (33) of the cassette wall (7a, 8) at the same distance.

20. The assembly and repair device according to any one of the preceding claims 5 to 18,
**characterized in that**
the guide element (25), a leg (27) of the sealing part (17), and a border area (28) of the cassette wall (7a, 8) form an essentially U-shaped receiving cavity for receiving a leg (27') of the respective other sealing part (17').

21. The assembly and repair device according to any one of the preceding claims,
**characterized in that**
the two cassette parts (1, 1') have a silicone joint (37) at the separating point (3).

## Revendications

1. Dispositif de montage et de réparation pour véhicules, en particulier véhicules de construction et utilitaires, comprenant une cassette insérable dans un évidement au sol, en acier ou dans un matériau similaire résistant à la corrosion, comprenant deux parois latérales longitudinales (7), des parois latérales frontales (5) disposées aux extrémités et un fond (8), sachant qu'éventuellement au moins les parois latérales présentent chacune une paroi intérieure (7a) et une paroi extérieure (7b) disposée à distance de celle-ci, lesquelles délimitent une cavité (9) pour la réception d'un matériau de remplissage durcissable, et sachant qu'éventuellement des éléments de cassette faisant saillie latéralement sur les parois latérales sont prévus pour le logement de galets de roulement d'un dispositif de contrôle de freinage ou similaire, et sachant qu'en outre la cassette est subdivisée en au moins deux sections de cassette (1, 1'), les au moins deux sections de cassette (1, 1') sont reliables entre elles au niveau d'un point de séparation (3), et les au moins deux éléments de cassette (1, 1') présentent une garniture d'étanchéité (15) au niveau du point de séparation (3),
**caractérisé en ce que**
les dimensions des au moins deux sections de cassette (1, 1') sont comme suit :
longueur (L1) ≤ 6 000 mm
largeur (B1) ≤ 2 400 mm
hauteur (H1) ≤ 2 400 mm
et respectivement
longueur (L2) ≤ 14 500 mm
largeur (B2) ≤ 2 400 mm
hauteur (H2) ≤ 2 700 mm
et que les au moins deux sections de cassette (1, 1') sont reliables entre elles sans joint de soudure au moyen de la garniture d'étanchéité (15).

2. Dispositif de montage et de réparation selon la revendication 1,
**caractérisé en ce que**
en cas d'éléments de cassette faisant saillie latéralement, ceux-ci sont en liaison avec la paroi latérale associée de la cassette via un point de séparation.

3. Dispositif de montage et de réparation selon la revendication 1 ou 2,
**caractérisé en ce que**
la garniture d'étanchéité (15) est disposée de façon périphérique au niveau du point de séparation (3), en regardant dans un plan de section de cassette.

4. Dispositif de montage et de réparation selon la revendication 1 ou 3,
**caractérisé en ce que**
la garniture d'étanchéité (15) présente, en regardant dans le sens périphérique (11) du point de séparation (3), plusieurs sections de garniture d'étanchéité (13a - 13k).

5. Dispositif de montage et de réparation selon l'une des précédentes revendications 1 à 4,
**caractérisé en ce que**
la garniture d'étanchéité (15) ou une section de garniture d'étanchéité (13a - 13k) comprend deux parties de garniture d'étanchéité (17, 17') reliables entre elles.

6. Dispositif de montage et de réparation selon la revendication 5,
**caractérisé en ce que**
les parties de garniture d'étanchéité (17, 17') sont disposées au niveau d'une paroi de cassette, en particulier sur un côté dirigé vers la paroi extérieure (7n) de la paroi intérieure (7a) et du fond (8).

7. Dispositif de montage et de réparation selon la revendication 5 ou 6,
**caractérisé en ce que**
les parties de garniture d'étanchéité (17, 17') sont soudées aux sections de cassette (1, 1').

8. Dispositif de montage et de réparation selon l'une des précédentes revendications 1 à 7,
**caractérisé en ce que**
la garniture d'étanchéité (15) ou les sections de garniture d'étanchéité (13a - 13k) est/sont constituée/s de manière labyrinthique, en regardant dans la section transversale.

9. Dispositif de montage et de réparation selon l'une des précédentes revendications 1 à 8,
**caractérisé en ce que**
les parties de garniture d'étanchéité (17, 17') sont constituées sensiblement en forme de L, en regardant dans la section transversale.

10. Dispositif de montage et de réparation selon l'une des précédentes revendications 5 à 9,
**caractérisé en ce que**
les parties de garniture d'étanchéité (17, 17') forment une garniture d'étanchéité (15) en forme de T à l'état assemblé, en regardant dans la section transversale.

11. Dispositif de montage et de réparation selon l'une des précédentes revendications 5 à 10,
**caractérisé en ce que**
les deux parties de garniture d'étanchéité (17, 17') sont vissées entre elles.

12. Dispositif de montage et de réparation selon l'une des précédentes revendications 5 à 11,
**caractérisé en ce que**
un élément d'étanchéité (23) supplémentaire, en particulier un ruban d'étanchéité, de préférence à base de bitume, est disposé entre les deux parties de garniture d'étanchéité (17, 17').

13. Dispositif de montage et de réparation selon l'une des précédentes revendications 5 à 12,
**caractérisé en ce que**
au moins l'une des parties de garniture d'étanchéité (17) est reliée au moins par secteur à un profil d'acier (21) rectangulaire, en regardant dans la section transversale, lequel est en contact avec l'autre partie de garniture d'étanchéité (17, 17') respectivement, à l'état assemblé de la garniture d'étanchéité (15) ou des parties de cassette (1, 1').

14. Dispositif de montage et de réparation selon la revendication 13,
**caractérisé en ce que**
le profil d'acier (21) est constitué longitudinalement et s'étend au moins par section le long de la direction périphérique (11) du point de séparation (3).

15. Dispositif de montage et de réparation selon l'une des précédentes revendications 5 à 14,
**caractérisé en ce que**
au moins l'une des parties de garniture d'étanchéité (17, 17') présente au moins un élément de guidage (25), lequel est disposé sur le côté ne faisant pas face à la paroi de cassette (7a, 8) de la partie de garniture d'étanchéité (17, 17').

16. Dispositif de montage et de réparation selon la revendication 15,
**caractérisé en ce que**
l'élément de guidage (25) est soudé à la partie de garniture d'étanchéité (17, 17').

17. Dispositif de montage et de réparation selon la revendication 15 ou 16,
**caractérisé en ce que**
chaque section de garniture d'étanchéité (13a - 13k) présente au moins un élément de guidage (25).

18. Dispositif de montage et de réparation selon l'une des précédentes revendications 15 à 17,
**caractérisé en ce que**
l'élément de guidage (25) dépasse des deux côtés d'une branche (27) de la partie de garniture d'étanchéité (17), en regardant dans la section transversale.

19. Dispositif de montage et de réparation selon l'une des précédentes revendications 5 à 18,
**caractérisé en ce que**
l'une des deux parties de garniture d'étanchéité (17'), en regardant dans la direction longitudinale (L) de la cassette, dépasse à raison d'une distance d'une arête (33') de la paroi de cassette (7a, 8) et l'autre partie de garniture d'étanchéité (17) afférente est en retrait à raison de la même distance derrière une arête (33) de la paroi de cassette (7a, 8).

20. Dispositif de montage et de réparation selon l'une des précédentes revendications 5 à 18,
**caractérisé en ce que**
l'élément de guidage (25), une branche (27) de la partie de garniture d'étanchéité (17) et une zone marginale (28) de la paroi de cassette (7a, 8) forment un évidement de logement sensiblement en forme de U pour le logement d'une branche (27') de l'autre partie de garniture d'étanchéité (17') respectivement.

21. Dispositif de montage et de réparation selon l'une des précédentes revendications,
**caractérisé en ce que**
les deux parties de cassette (1, 1') présentent un joint de silicone (37) au niveau du point de séparation (3).
